# EUROPEAN PATENT APPLICATION

(11) **EP 4 749 454 A1**
(43) Date of publication of application: **27.05.2026**
(21) Application number: 25202168.8
(22) Date of filing: 15.09.2025
(51) Int. Cl.: G06F 9/50

(54) **METHOD AND SYSTEM FOR PERFORMING MULTI-FOLD OPERATIONS ON COMPLEX DATA**

(30) Priority: 22.11.2024 IN 202421090851
(71) Applicant: Tata Consultancy Services Limited, Mumbai, Maharashtra 400 021 (IN)
(72) Inventor: SHAH, Viral Prakash, 400607 Thane West, Maharashtra (IN); CHATTERJEE, Swarup, 700160 Kolkata, West Bengal (IN); BAKSI, Sharmila, 700160 Kolkata, West Bengal (IN); DEY, Deb Shankar, 700160 Kolkata, West Bengal (IN); MONDAL, Soumesh, 700160 Kolkata, West Bengal (IN); ROY, Gautam, 700160 Kolkata, West Bengal (IN)
(74) Representative: Goddar, Heinz J.

(57) **Abstract**

This disclosure relates generally to a method and system for performing multi-fold operations on complex data. Conventional methods do not have plug and play reusable components for processing high volume complex data concurrently. Also, these do not consider distributed or interactive data processing using optimal resources. The disclosed method performs operations on complex data with optimal execution time, memory and computation resource. The input data fed into the disclosed system are packaged into data chunks and distributed across available resources for preprocessing. The data chunks are pre-processed and converted into machine readable binary format. The data is again traversed to generate operation data chunks. The operation is performed for each operation data chunk, using the converted machine-readable binary format to generate the result of the operation. The disclosed method is used for operations such as search, comparison and so on in image processing.

## Description

### CROSS-REFERENCE TO RELATED APPLICATIONS AND PRIORITY

The present application claims priority to Indian application no. 202421090851, filed on November 22, 2024.

### TECHNICAL FIELD

The disclosure herein generally relates to complex data type processing, and, more particularly, to a method and system for performing multi-fold operations on complex data.

### BACKGROUND

Currently there are systems available which are built for a specific type of complex data type operations to provide solutions for a particular task. These solutions work very efficiently for a small set of inputs or a very specific use case. Most of the solutions can scale for real world problems by creating a balance between the number of computations or duration/efficiency of the analysis. This trade off or balancing is required as the solutions can only scale by either using specialized hardware or investing in many off the shelf hardware to maintain a high level of confidence as the computation is resource intensive.

As an instance, in this era of digitization, a lot of complex data types like voice, image, video, text etc. are used for operations for a particular task to be performed. It is often required to perform operations like search, duplicate data identification from a set of these complex data types. Performing any operation on complex data types requires humongous amount of time, memory, computational resource. Currently specialized hardware is to be used for these kinds of operations, which is not economical and requires a greater amount of time and memory.

### SUMMARY

Embodiments of the present disclosure present technological improvements as solutions to one or more of the above-mentioned technical problems recognized by the inventors in conventional systems. For example, in one embodiment, a method for performing multi-fold operations on complex data is provided. The method includes receiving an input data from a plurality of sources for performing a task comprising a set of multi-fold operations. Further, the method includes creating a first plurality of data chunks from the input data based on a first configurable data chunk size. Then the method includes creating a first plurality of data packets from the first plurality of data chunks based on a first configurable data packet size. The first plurality of data packets is distributed amongst a set of available resources. Furthermore, the method includes, iteratively performing a set of steps at each available resource amongst the set of available resources, to process the first plurality of data packets, until a termination criterion is met. The set of steps includes unpacking at least one data packet amongst the first plurality of data packets into a set of data chunks. Further the set of steps includes marking a status associated with at least one data packet and the set of data chunks into a first state and applying a pre-customized logic operation to the set of data chunks to obtain a pre-processed data. The pre-processed data stored in a pre-processed data store is in a machine-readable binary format. Finally, the set of steps includes marking the status associated with at least one data packet and the set of data chunks into a second state. The termination criterion is defined as the status of each data packet amongst the first plurality of data packets is in the second state. Furthermore, the method includes creating a second plurality of data chunks based on (i) a type of the set of multi-fold operations, and (ii) a second configurable data chunk size. The second plurality of data chunks is stored in a major operation engine data store. Further, the method includes generating an intermediate output for each of the data packets amongst the second plurality of data packets. The intermediate output is stored in a result generator engine data store. Finally, the method includes merging the intermediate output corresponding to each data packet amongst the second plurality of data packets to obtain a result for the multi-fold operation.

In another aspect, a system for performing multi-fold operations on complex data is provided. The system comprises memory storing instructions; one or more communication interfaces; and one or more hardware processors coupled to the memory via the one or more communication interfaces, wherein the one or more hardware processors are configured by the instructions to receive an input data from a plurality of sources for performing a task comprising a set of multi-fold operations. Further, the system includes creating a first plurality of data chunks from the input data based on a first configurable data chunk size. Next the system includes creating a first plurality of data packets from the first plurality of data chunks based on a first configurable data packet size. The first plurality of data packets is distributed amongst a set of available resources. Furthermore, the system includes, iteratively performing a set of steps at each available resource amongst the set of available resources, to process the first plurality of data packets, until a termination criterion is met. The set of steps includes unpacking at least one data packet amongst the first plurality of data packets into a set of data chunks. Further the set of steps includes marking a status associated with at least one data packet and the set of data chunks into a first state and applying a pre-customized logic operation to the set of data chunks to obtain a pre-processed data. The pre-processed data stored in a pre-processed data store is in a machine-readable binary format. Finally, the set of steps includes marking the status associated with at least one data packet and the set of data chunks into a second state. The termination criterion is defined as the status of each data packet amongst the first plurality of data packets is in the second state. Furthermore, the system includes creating a second plurality of data chunks based on (i) a type of the set of multi-fold operations, and (ii) a second configurable data chunk size. The second plurality of data chunks is stored in a major operation engine data store. Further, the system includes generating an intermediate output for each of the data packets amongst the second plurality of data packets. The intermediate output is stored in a result generator engine data store. Finally, the system includes merging the intermediate output corresponding to each data packet amongst the second plurality of data packets to obtain a result for the multi-fold operation.

The input data stored in a data ingestion engine comprises one or more complex data types. The first plurality of data chunks is created from the input data by initially computing number of data chunks based on a size of the input data and the first configurable data chunk size acquired from a configuration data store. Further it includes, creating the first plurality of data chunks based on the number of data chunks and tagging each data chunk amongst the plurality of data chunks using a first tag identifier. Finally, creating the first plurality of data chunks includes storing in a pre-processing engine data store.

The first plurality of data packets is created by initially computing number of data packets based on the number of data chunks and the first configurable data packet size acquired from the configuration data store. Further it includes creating the first plurality of data packets based on the number of data packets and finally tagging each data packet amongst the first plurality of data packets using a second tag identifier.

The intermediate output for each of the data packets amongst the second plurality of data packets is generated by initially unpacking the data packet into the set of data chunks. Further, a status associated with the data packet and the set of data chunks is marked into the first state and the pre-processed data associated with the set of data chunks is fetched from the pre-processed data store. Further, the operation is performed on the pre-processed data to obtain the intermediate output and finally the status associated with the data packet and the set of data chunks is marked into the second state.

In yet another aspect, there are provided one or more non-transitory machine-readable information storage media comprising one or more instructions which when executed by one or more hardware processors cause performing multi-fold operations on complex data by receiving an input data from a plurality of sources for performing a task comprising a set of multi-fold operations. Further, the instructions which when executed by the one or more hardware processors cause creating a first plurality of data chunks from the input data based on a first configurable data chunk size. Then the instructions which when executed by the one or more hardware processors cause creating a first plurality of data packets from the first plurality of data chunks based on a first configurable data packet size. The first plurality of data packets is distributed amongst a set of available resources. Furthermore, the instructions which when executed by the one or more hardware processors cause, iteratively performing a set of steps at each available resource amongst the set of available resources, to process the first plurality of data packets, until a termination criterion is met. The set of steps includes unpacking at least one data packet amongst the first plurality of data packets into a set of data chunks. Further the set of steps includes marking a status associated with at least one data packet and the set of data chunks into a first state and applying a pre-customized logic operation to the set of data chunks to obtain a pre-processed data. The pre-processed data stored in a pre-processed data store is in a machine-readable binary format. Finally, the set of steps includes marking the status associated with at least one data packet and the set of data chunks into a second state. The termination criterion is defined as the status of each data packet amongst the first plurality of data packets is in the second state. Furthermore, the instructions which when executed by the one or more hardware processors cause creating a second plurality of data chunks based on (i) a type of the set of multi-fold operations, and (ii) a second configurable data chunk size. The second plurality of data chunks is stored in a major operation engine data store. Further, the instructions which when executed by the one or more hardware processors cause generating an intermediate output for each of the data packets amongst the second plurality of data packets. The intermediate output is stored in a result generator engine data store. Finally, the instructions which when executed by the one or more hardware processors cause merging the intermediate output corresponding to each data packet amongst the second plurality of data packets to obtain a result for the multi-fold operation.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for performing multi-fold operations on complex data according to some embodiments of the present disclosure.
FIG. 2 is a functional block diagram of the system for performing multi-fold operations on complex data in accordance with some embodiments of the present disclosure.
FIG. 3A and FIG. 3B is an exemplary flow diagram illustrating a method for performing multi-fold operations on complex data according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In the disclosed invention, the problem of complex data operations is addressed by performing multi-fold operations on complex data types with a scalable design. The complete process of complex data operation is divided into a multi-step processing pipeline. The disclosed method is built using a number of components, each of which is responsible for a specific step of the processing pipeline. Each component of the pipeline has been designed to scale individually using low cost off the shelf hardware. Each component also has a number of elements that allow for a higher utilization of available resources by leveraging concepts like micro batching, caching etc. The disclosed system can perform complex data type processing in real time mode or asynchronous mode. Analysis components can be written in any technology and can handle a highly concurrent data load. To handle varied data loads, the disclosed system can be easily scaled up or scaled down. It can be integrated with any external system or application and can be easily scaled up or scaled down. The system is protocol agnostic. The system makes use of the minimal number of datastore connections and network calls. The system also does not require the availability of any advanced computational resource and is hence cost friendly.

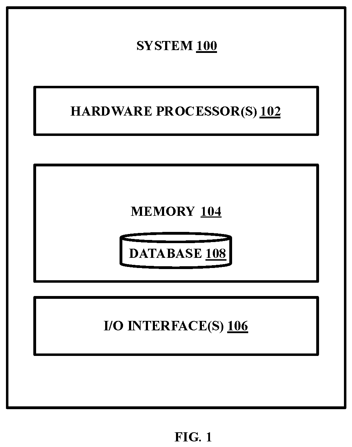

Referring now to the drawings, and more particularly to FIG. 1 through FIG.3B, where similar reference characters denote corresponding features consistently throughout the figures, there are shown preferred embodiments, and these embodiments are described in the context of the following exemplary system and/or method.

FIG. 1 illustrates an exemplary block diagram of a system for performing multi-fold operations on complex data according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

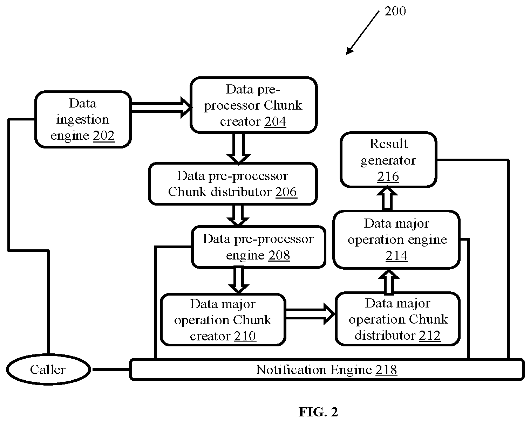

In an embodiment, the memory 104 includes a plurality of modules as depicted in FIG. 2, a data ingestion engine 202, a data pre-processor chunk creator 204, a data pre-processor chunk distributor 206, a data pre-processor engine 208, a data major operation chunk creator 210, a data major operation chunk distributor 212, a data major operation engine 214, a result generator 216 and the like. Further, the plurality of modules includes programs or coded instructions that supplement applications or functions performed by the system 100 for executing different steps involved in the process for multi-fold operations on complex data being performed by the system 100. The plurality of modules, amongst other things, can include routines, programs, objects, components, and data structures, which perform particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules (not shown).

Further, the memory 104 may include a database 108 or repository. The database can store data such as a first plurality of data chunks, a first plurality of data packets, a second plurality of data chunks, a second plurality of data packets (not shown) and the like. The memory 104 may comprise information pertaining to input(s)/output(s) of each step performed by the processor(s) 102 of the system 100 and methods of the present disclosure. In an embodiment, the database 108 may be external to the system 100 and coupled via the I/O interface 106. The database may include data sources corresponding to complex data and so on.

FIG. 2 is a functional block diagram of the system for performing multi-fold operations on complex data in accordance with some embodiments of the present disclosure. FIG. 2 comprises several components or modules such as the data ingestion engine 202, the data pre-processor chunk creator 204, the data pre-processor chunk distributor 206, the data pre-processor engine 208, the data major operation chunk creator 210, the data major operation chunk distributor 212, the data major operation engine 214, the result generator 216 and a notification engine 218. The data ingestion engine 202 is used as the source of input data that needs to be operated upon. The data pre-processor chunk creator 204 is responsible for traversing the input data, dividing the data points into pre-processor chunks and handing it over to the data pre-processor chunk distributor 206 for distribution across the available resources. The data pre-processor chunk distributor 206 is responsible for distributing the pre-processor chunks across the available resources in the most optimal way. The data preprocessor engine 208 is responsible for reading the received chunks and preprocessing the read chunks (e.g. converting the input data points into a set of binary data (N-dimensional matrices)). The binary data is then saved into a data store for further processing. The data major operation chunk creator 210 is responsible for traversing the input data, generating the required data points for major operation (e.g. to compare N data points, perform N*(N-1) comparisons.). The generated data points are divided into chunks and handed over to the data major operation chunk distributor 212 for distribution across the available resources. The data major operation chunk distributor 212 is responsible for distributing the major operation chunks across the available resources in the most optimal way. The data major operation engine 214 is responsible for reading the received chunks and performing the major operation (search, comparison, etc.). The generated intermediate result is saved into a pre-processing engine data store. The notification engine 218 is responsible for sending intermediate updates about the progress percentage to the caller solution. The result generator 216 is responsible for consolidation of the intermediate results across all resources and produce the result of the distributed operation.

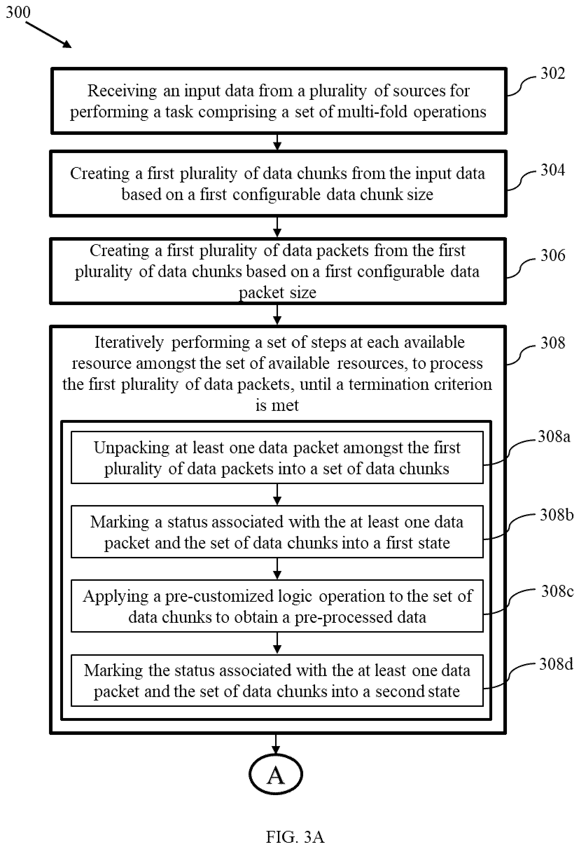

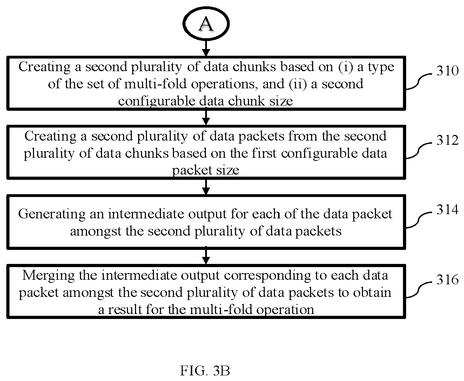

FIG. 3A and FIG. 3B is an exemplary flow diagram illustrating a method 300 for performing multi-fold operations on complex data according to some embodiments of the present disclosure. In an embodiment, the system 100 comprises one or more data storage devices or the memory 104 operatively coupled to the one or more hardware processor(s) 102 and is configured to store instructions for execution of steps of the method 300 by the processor(s) or one or more hardware processors 102. The steps of the method 300 of the present disclosure will now be explained with reference to the components or blocks of the system 100 as depicted in FIG. 1 and the components as depicted in FIGS. 3A-3B. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof.

Now referring to FIG. 3A, at step 302 of the method 300, the one or more hardware processors 102 are configured to receive an input data from a plurality of sources for performing a task comprising a set of multi-fold operations. The input data stored in the data ingestion engine 202 comprises one or more complex data types such as in the form of images, videos, texts etc. The caller as shown in FIG. 2 has the input data in the form of a flat file system or a database schema or in any desired format. The data ingestion engine 202 is responsible for ingesting the input data from the shared storage into the disclosed system. The data ingestion engine 202 is protocol agnostic in nature and is flexible enough to consume data from any storage or media.

Further, at step 304 of the method 300, the one or more hardware processors 102 are configured to create a first plurality of data chunks from the input data based on a first configurable data chunk size. The data pre-processor chunk creator 204 is responsible for receiving the input data from the data ingestion engine 202, divide the data points in the input data into the first plurality of data chunks and hand it over to the data pre-processor chunk distributor 206 for distribution across the available resources. The chunk creation is done based on the first configurable chunk size fetched from a configuration data store. Creation of the chunks helps to distribute the data across the available resources for computation.

The first plurality of data chunks is created from the input data using the explanation herewith. Initially the number of data chunks is computed based on a size of the input data and the first configurable data chunk size. The first configurable data chunk size is acquired from the configuration data store. Further, the first plurality of data chunks is created based on the computed number of data chunks. Then, each data chunk amongst the plurality of data chunks is tagged using a first tag identifier which is a unique identifier in the form of a number. Finally, the first plurality of data chunks is stored in the pre-processing engine data store. For example, the input data consists of N data points and the first configurable data chunk size for data pre-processing is CP. Then the dataset is divided into (N/CP) data chunks. These data chunks are written to another intermediate data store for distribution. Each of the data chunks is tagged with a unique chunk identifier to help identify the number of processed and pending chunks which is later explained.

Further, at step 306 of the method 300, the one or more hardware processors 102 are configured to create a first plurality of data packets from the first plurality of data chunks based on a first configurable data packet size. The first plurality of data packets is distributed amongst a set of available resources. The first plurality of data packets is created by first computing the number of data packets based on the number of data chunks and the first configurable data packet size acquired from the configuration data store. Further the first plurality of data packets is created based on the number of data packets. Finally, each data packet amongst the first plurality of data packets is tagged using a second tag identifier. The data pre-processor chunk distributor 206 is responsible for retrieving the data chunks from the pre-processing engine data store and distributing it across the available resources. The distribution is done in a highly scalable mode across a pool of available resources. There are multiple instances of the data pre-processor engine 208, to support high concurrency. The first plurality of data chunks is forwarded in bulk as a data packet to the data pre-processor engines. There is an option to set a cap on the maximum number of data packets that can be forwarded to the data pre-processor engine 208 at a time. The total number of data chunks (C) are divided into C' packets, where C'=C/NC (NC being the configured size for the number of chunks to be handed over to a single resource in the pool for computation). The distribution is done through an efficient load balanced technique, thereby facilitating highly concurrent data processing with minimal latency.

Further, at step 308 of the method 300, the one or more hardware processors 102 are configured to iteratively perform a set of steps from 308a through 308d at each available resource amongst the set of available resources, to process the first plurality of data packets, until a termination criterion is met. At step 308a, at least one data packet amongst the first plurality of data packets is unpacked into a set of data chunks. At step 308b, a status associated with at least one data packet and the set of data chunks is marked into a first state. The first state represents that the process is in-progress. At step 308c, a pre-customized logic operation is applied to the set of data chunks to obtain pre-processed data. The pre-processed data is stored in a pre-processed data store is in a machine-readable binary format. Finally at step 308d, the status associated with at least one data packet and the set of data chunks is marked into a second state. The second state represents that the process is completed. The termination criterion is defined as the status of each data packet amongst the first plurality of data packets is in the second state. i.e., if all the data packets are processed and completed.

For example, for each of the received data packet D, the data pre-processor engine 208 unpacks D into NC number of data chunks. Then it unpacks each of the NC number of chunks into CP number of individual pre-processing data points. The processing status for each of the individual data points and the processing packet is recorded in the pre-processing engine data store as "in-progress". Each of the data block is then iterated, data points are processed and converted into a machine-readable N-dimensional matrix. This matrix is the binary representation of the input data point and is used in the later phases of computation. In the event of computation failure for any data packet, the same can be re-attempted as per the mentioned retry mechanism. The pre-processed format is saved into a data store for further usage. The processing status for the individual data points and the processing data packet are recorded in the pre-processing engine data store as "completed". The data store is then scanned to verify if all the data packets have been completely processed. If yes, then the system 100 proceeds to the next phase of major operation on the original data (i.e. search or comparison). If not, the system 100 waits for all the data packets to get completely processed.

Further, at step 310 of the method 300, the one or more hardware processors 102 are configured to create a second plurality of data chunks based on (i) a type of the set of multi-fold operations, and (ii) a second configurable data chunk size. The second plurality of data chunks is stored in a major operation engine data store. The processing pipeline of any complex data type involves two main steps. The first step is conversion of the data point into an N-dimensional matrix. This conversion involves many compute-intensive tasks such as conversion of complex data types into machine readable format, for example image to vectors and hence takes a considerable amount of time in the whole processing pipeline. The second step is operation on the generated matrices which usually takes a negligible amount of time, with respect to the whole processing time. The data major operation chunk creator 210 is responsible for processing the second plurality of data chunks for phase two of the processing pipeline. It traverses the input data to build the second plurality of data chunks. The size of each chunk is configurable and remains a part of the configuration data store. The number of data points to be processed might also be higher when compared to that of phase one i.e., data preprocessing phase. For example, if the major operation to be performed is to find the duplicates from a set of N data points, it involves O(N*(N-1)) comparisons(operations). The created second plurality of data chunks are written to the major operation engine data store for distribution and processing across the available resources.

Further, at step 312 of the method 300, the one or more hardware processors 102 are configured to create a second plurality of data packets from the second plurality of data chunks based on the first configurable data packet size. The second plurality of data packets is distributed amongst the set of available resources. The data major operation chunk distributor 212 is responsible for retrieving the second plurality of data chunks from the major operation engine data store and distributing it across the available resources. The distribution is done in a highly scalable mode across a pool of available resources. There are multiple instances of the data major operation engine, to support high concurrency. The second plurality of data chunks are forwarded in bulk as a data packet to the data major operation engines. There is an option to set a cap on the maximum number of data packets that can be forwarded to a data major operation engine at a time. The total number of data chunks(C) are divided into C' packets, where C'=C/NC (NC being the configured size for the number of chunks to be handed over to a single resource in the pool for computation). The distribution is done through an efficient load balanced technique, thereby facilitating highly concurrent data processing with minimal latency.

Further, at step 314 of the method 300, the one or more hardware processors 102 are configured to generate an intermediate output for each of the data packet amongst the second plurality of data packets. The intermediate output is then stored in a result generator engine data store. The generation of the intermediate output for each data packet amongst the second plurality of data packets is explained henceforth and the data major operation engine 214 is responsible for this step. First the data packet into the set of data chunks in unpacked. Further a status associated with the data packet and the set of data chunks are marked into the first state, i.e., as "in-progress". Then the pre-processed data associated with the set of data chunks is fetched from the pre-processed data store and further the operation on the pre-processed data is performed to obtain the intermediate output. Finally, the status associated with the data packet and the set of data chunks are marked into the second state, i.e., as "completed".

On receipt of the second plurality of data packets at the data major operation engine, the engine unpacks the packet into set of chunks. The chunks are further divided into individual data points. For each of the data points, the corresponding pre-processed data is fetched from the pre-processing engine data store. The pre-processed data is an N-dimensional matrix. The major operation (comparison or search etc.) is then performed on the data chunk using the matrices. The status for the data chunks as well as the data points is updated in the pre-processing engine data store as "in-progress". Once the operation is completed, the status is updated in the pre-processing engine data store as "Completed". For each completed data chunk, progress percentage update is sent to the caller via the notification engine 218. The notification engine 218 is protocol agnostic in nature and communicates with the caller using REST endpoint or simple method calls. The data major operation engine 214 also checks if all the second plurality of data chunks is completed. If so, then the result generator 216 is invoked to consolidate and build the final result of the entire operation.

Further, at step 316 of the method 300, the one or more hardware processors 102 are configured to merge the intermediate output corresponding to each data packet amongst the second plurality of data packets to obtain a result for the multi-fold operation. For each of the second plurality of data chunk executed by the pool of resources, intermediate results are written to the result generator engine data store. The result of the entire operation on the input data set needs to be built by consolidation of these intermediate results. The result generator 216 is responsible for performing this. The consolidated result can be written to a data store for final consumption by the caller.

The disclosed system is scalable and able to perform heavy compute intensive tasks on complex data types using the most optimal techniques. The approach also does not involve usage of any specialized hardware or technologies to support the implementation. In the disclosed method, each of the blocks are pluggable components, technology and protocol are agnostic in nature. Each block can have a fleet of resources to perform the operation and is independently scaled up or down. The architecture is sustainable and is not bound to any advanced or costly resources to make it operational.

The disclosed method 300 is now explained with a use example in conjunction with the components given in FIG. 2. Consider a scenario to perform NxN comparison within a given set of candidate facial images captured during an online assessment across multiple shifts. Here shifts can happen over multiple days across a range of test or examination centers. The intent is to churn this data to figure out the possible impersonators who have tried to conduct malpractice via impersonation. Using the data ingestion engine 202, the captured images are initially stored in a data store and the file paths are written into a CSV file. The CSV file is passed as input data to the disclosed system, along with the total number of candidates for which this exercise is being carried out. The CSV file path and candidate count are saved for the next step.

Further, using the data pre-processor chunk creator 204 the candidate count is divided by the configured pre-processor chunk size (20), to get the total number of data chunks to be created. The CSV was then split into these many parts and written to the pre-processing engine data store. Each part is tagged with a unique identifier (part Id) and marked with status as "New". Using the data pre-processor chunk distributor 206 the parts are then distributed across the available batch of processing servers in the preprocessing pool. Each server can process a maximum of 22 parts in parallel and can handle 8 such blocks (with 22 parts in each block) in 1 minute. So, during the distribution of parts across servers, 8 blocks (with 22 parts in each block) are allocated to each server. There are 17 servers and hence 17*8=136 blocks = 136*22 = 2992 parts are distributed in 1 minute across these servers. The remaining parts are still in queue with status as "New".

Further, using the data pre-processor engine 208 on each server, when one block of request is received, the data pre-processor engine 108 unpacks it to get 22 parts. Now each part is operated upon and modified status in put in pre-processing engine datastore as "In progress". For each part, the file paths are read from CSV, actual files are streamed from ingested data store and the images are converted into vectors for the available facial features of the candidates. Once done, the part is updated as "Completed" in the pre-processing engine datastore. Notification is sent to the system which then checks to see if all parts pre-processing is completed. If not, then the pre-processing phase continues. Else, it moves to next phase. The vector(s) for each part is written into the pre-processed datastore (flat file system here).

In the data major operation chunk creator 210, once pre-processing is completed for all parts, this phase is started. For each candidate image path in the CSV, parts each containing configured chunk size (5000) number of records is created. So, if there are a total of 1000 candidates, then for 1st candidate parts as - [Candidate 1 vs (Candidate 2 to Candidate 5001), Candidate 1 vs (Candidate 5002 to Candidate 10000)] is created. For candidate 2, it would be - [Candidate 2 vs (Candidate 3 to Candidate 5002), Candidate 2 vs (Candidate 5003 to Candidate 10000)] and so on for other candidates. Each part is tagged with a unique identifier (part Id) and marked with status as "New".

In the data major operation chunk distributor 212 the parts are then distributed across the available batch of processing servers in the major operation pool. Each server can process a maximum of 22 parts in parallel and handles 8 such blocks (with 22 parts in each block) in 1 minute. So, during the distribution of parts across servers, we allocate 8 blocks (with 22 parts in each block) to each server. There are 10 servers and hence 10*8=80 blocks = 80*22 = 1760 parts can be distributed in 1 minute across these servers. The remaining parts are still in queue with status as "New".

In the data major operation engine 214, on each server, when one block of request is received, the data major operation engine 214 unpacks it to get 22 parts. Now each part is operated upon and modified status in put in the result generator engine data store as "In progress". For each part, the file paths are read from CSV, preprocessed vectors for these files are streamed from the pre-processed data store and cosine similarity is computed for the vectors. Once done, the part is updated as "Completed" in the result generator engine data store. If the similarity score for any image pair is found to be above the set threshold, the image pair is marked for possible impersonation. Notification is sent to the system which then checks to see if all parts major operation is completed. If not, then the phase continues. Else, it moves to next phase.

In the result generator 216, once all the phases are complete, the image pairs marked for possible impersonation are consolidated and written into a single flat file. The path for this result file is then shared with the caller. The caller checks and identifies the corresponding candidates who have been caught for possible impersonation by the system 100.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure provide a method for performing multi-fold operations on complex data. The disclosed method performs operations on these data types with the most optimal execution time, memory and computation resource. The concept can be used for simple data types also. Input data is fed into the system from an external data store (flat file system, database tables etc.). The data points are read from the input store, packaged into chunks and distributed across the resources for pre-processing. The chunks are pre-processed and converted into a machine-readable binary format. Once the binary format for each of the data points is ready, the next step is to perform the actual operation (for example, search or duplication detection). The input data points are once again traversed to generate the operation chunks and distributed across the available resources. For each of the data chunks, the data matrices (binary format) are fed into a comparison engine to perform the operation. This processing is done in a highly scalable and distributed mode ensuring optimal usage of available resources.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) comprising:
receiving, via one or more hardware processors, an input data from a plurality of sources for performing a task comprising a set of multi-fold operations (302);
creating, via the one or more hardware processors, a first plurality of data chunks from the input data based on a first configurable data chunk size (304);
creating, via the one or more hardware processors, a first plurality of data packets from the first plurality of data chunks based on a first configurable data packet size, wherein the first plurality of data packets is distributed amongst a set of available resources (306);
iteratively performing, via the one or more hardware processors, a set of steps at each available resource amongst the set of available resources, to process the first plurality of data packets, until a termination criterion is met (308), wherein the set of steps comprises:
unpacking at least one data packet amongst the first plurality of data packets into a set of data chunks (308a);
marking a status associated with the at least one data packet and the set of data chunks into a first state (308b);
applying a pre-customized logic operation to the set of data chunks to obtain a pre-processed data, wherein the pre-processed data stored in a pre-processed data store is in a machine-readable binary format (308c); and
marking the status associated with the at least one data packet and the set of data chunks into a second state (308d);
wherein the termination criterion is defined as the status of each data packet amongst the first plurality of data packets is in the second state,
creating, via the one or more hardware processors, a second plurality of data chunks based on (i) a type of the set of multi-fold operations, and (ii) a second configurable data chunk size, wherein the second plurality of data chunks is stored in a major operation engine data store (310);
creating, via the one or more hardware processors, a second plurality of data packets from the second plurality of data chunks based on the first configurable data packet size, wherein the second plurality of data packets is distributed amongst the set of available resources (312);
generating, via the one or more hardware processors, an intermediate output for each of the data packets amongst the second plurality of data packets, wherein the intermediate output is stored in a result generator engine data store (314); and
merging, via the one or more hardware processors, the intermediate output corresponding to each data packets amongst the second plurality of data packets to obtain a result for the multi-fold operation (316).

2. The processor implemented method as claimed in claim 1, wherein the input data stored in a data ingestion engine comprises one or more complex data types.

3. The processor implemented method as claimed in claim 1, wherein creating the first plurality of data chunks from the input data comprises:
computing, via the one or more hardware processors, number of data chunks based on a size of the input data and the first configurable data chunk size acquired from a configuration data store;
creating, via the one or more hardware processors, the first plurality of data chunks based on the number of data chunks;
tagging, via the one or more hardware processors, each data chunk amongst the plurality of data chunks using a first tag identifier; and
storing, via the one or more hardware processors, the first plurality of data chunks in a pre-processing engine data store.

4. The processor implemented method as claimed in claim 1, wherein creating the first plurality of data packets comprises:
computing, via the one or more hardware processors, number of data packets based on the number of data chunks and the first configurable data packet size acquired from the configuration data store;
creating, via the one or more hardware processors, the first plurality of data packets based on the number of data packets; and
tagging, via the one or more hardware processors, each data packet amongst the first plurality of data packets using a second tag identifier.

5. The processor implemented method as claimed in claim 1, wherein generating the intermediate output for each of the data packets amongst the second plurality of data packets comprises:
unpacking, via the one or more hardware processors, the data packet into the set of data chunks;
marking, via the one or more hardware processors, a status associated with the data packet and the set of data chunks into the first state;
fetching, via the one or more hardware processors, the pre-processed data associated with the set of data chunks from the pre-processed data store;
performing, via the one or more hardware processors, the operation on the pre-processed data to obtain the intermediate output, and
marking, via the one or more hardware processors, the status associated with the data packet and the set of data chunks into the second state.

6. A system (100), comprising:
a memory (104) storing instructions;
one or more communication interfaces (106); and
one or more hardware processors (102) coupled to the memory (104) via the one or more communication interfaces (106), wherein the one or more hardware processors (102) are configured by the instructions to:
receive an input data from a plurality of sources for performing a task comprising a set of multi-fold operations;
create a first plurality of data chunks from the input data based on a first configurable data chunk size;
create a first plurality of data packets from the first plurality of data chunks based on a first configurable data packet size, wherein the first plurality of data packets is distributed amongst a set of available resources;
iteratively perform a set of steps at each available resource amongst the set of available resources, to process the first plurality of data packets, until a termination criterion is met, wherein the set of steps comprises:
unpacking at least one data packet amongst the first plurality of data packets into a set of data chunks;
marking a status associated with the at least one data packet and the set of data chunks into a first state;
applying a pre-customized logic operation to the set of data chunks to obtain a pre-processed data, wherein the pre-processed data stored in a pre-processed data store is in a machine-readable binary format; and
marking the status associated with the at least one data packet and the set of data chunks into a second state;
wherein the termination criterion is defined as the status of each data packet amongst the first plurality of data packets is in the second state,
create a second plurality of data chunks based on (i) a type of the set of multi-fold operations, and (ii) a second configurable data chunk size, wherein the second plurality of data chunks is stored in a major operation engine data store;
create a second plurality of data packets from the second plurality of data chunks based on the first configurable data packet size, wherein the second plurality of data packets is distributed amongst the set of available resources;
generate an intermediate output for each of the data packets amongst the second plurality of data packets, wherein the intermediate output is stored in a result generator engine data store; and
merge the intermediate output corresponding to each data packet amongst the second plurality of data packets to obtain a result for the multi-fold operation.

7. The system as claimed in claim 6, wherein the input data stored in a data ingestion engine comprises one or more complex data types.

8. The system as claimed in claim 6, wherein the first plurality of data chunks is created from the input data comprises:
computing number of data chunks based on a size of the input data and the first configurable data chunk size acquired from a configuration data store;
creating the first plurality of data chunks based on the number of data chunks;
tagging each data chunk amongst the plurality of data chunks using a first tag identifier; and
storing the first plurality of data chunks in a pre-processing engine data store.

9. The system as claimed in claim 6, wherein the first plurality of data packets is created by:
computing number of data packets based on the number of data chunks and the first configurable data packet size acquired from the configuration data store;
creating the first plurality of data packets based on the number of data packets; and
tagging each data packet amongst the first plurality of data packets using a second tag identifier.

10. The system as claimed in claim 6, wherein the intermediate output for each of the data packets amongst the second plurality of data packets is generated by:
unpacking the data packet into the set of data chunks;
marking a status associated with the data packet and the set of data chunks into the first state;
fetching the pre-processed data associated with the set of data chunks from the pre-processed data store;
performing the operation on the pre-processed data to obtain the intermediate output; and
marking the status associated with the data packet and the set of data chunks into the second state.

11. One or more non-transitory machine-readable information storage mediums comprising one or more instructions which when executed by one or more hardware processors cause:
receiving an input data from a plurality of sources for performing a task further comprising a set of multi-fold operations;
creating a first plurality of data chunks from the input data based on a first configurable data chunk size;
creating a first plurality of data packets from the first plurality of data chunks based on a first configurable data packet size, wherein the first plurality of data packets is distributed amongst a set of available resources;
iteratively performing a set of steps at each available resource amongst the set of available resources, to process the first plurality of data packets, until a termination criterion is met, wherein the set of steps comprises:
unpacking at least one data packet amongst the first plurality of data packets into a set of data chunks;
marking a status associated with the at least one data packet and the set of data chunks into a first state;
applying a pre-customized logic operation to the set of data chunks to obtain a pre-processed data, wherein the pre-processed data stored in a pre-processed data store is in a machine-readable binary format; and
marking the status associated with the at least one data packet and the set of data chunks into a second state;
wherein the termination criterion is defined as the status of each data packet amongst the first plurality of data packets is in the second state,
creating a second plurality of data chunks based on (i) a type of the set of multi-fold operations, and (ii) a second configurable data chunk size, wherein the second plurality of data chunks is stored in a major operation engine data store;
creating a second plurality of data packets from the second plurality of data chunks based on the first configurable data packet size, wherein the second plurality of data packets is distributed amongst the set of available resources;
generating an intermediate output for each of the data packets amongst the second plurality of data packets, wherein the intermediate output is stored in a result generator engine data store; and
merging the intermediate output corresponding to each data packets amongst the second plurality of data packets to obtain a result for the multi-fold operation.

12. The one or more non-transitory machine-readable information storage mediums as claimed in claim 11, wherein the input data stored in a data ingestion engine comprises one or more complex data types.

13. The one or more non-transitory machine-readable information storage mediums as claimed in claim 11, wherein creating the first plurality of data chunks from the input data comprises:
computing number of data chunks based on a size of the input data and the first configurable data chunk size acquired from a configuration data store;
creating the first plurality of data chunks based on the number of data chunks;
tagging each data chunk amongst the plurality of data chunks using a first tag identifier; and
storing the first plurality of data chunks in a pre-processing engine data store.

14. The one or more non-transitory machine-readable information storage mediums as claimed in claim 11, wherein creating the first plurality of data packets comprises:
computing number of data packets based on the number of data chunks and the first configurable data packet size acquired from the configuration data store;
creating the first plurality of data packets based on the number of data packets; and
tagging each data packet amongst the first plurality of data packets using a second tag identifier.

15. The one or more non-transitory machine-readable information storage mediums of claim 11, wherein generating the intermediate output for each of the data packets amongst the second plurality of data packets comprises:
unpacking the data packet into the set of data chunks;
marking a status associated with the data packet and the set of data chunks into the first state;
fetching the pre-processed data associated with the set of data chunks from the pre-processed data store;
performing the operation on the pre-processed data to obtain the intermediate output, and
marking the status associated with the data packet and the set of data chunks into the second state.
